# EUROPEAN PATENT APPLICATION

(11) **EP 4 141 635 A1**
(43) Date of publication of application: **01.03.2023**
(21) Application number: 21818513.0
(22) Date of filing: 02.04.2021
(51) Int. Cl.: G06F 3/0488

(54) **WEARABLE DEVICE INTERACTION METHOD AND APPARATUS, WEARABLE DEVICE, AND STORAGE MEDIUM**

(30) Priority: 05.06.2020 CN 202010508169
(71) Applicant: GUANGDONG OPPO MOBILE TELECOMMUNICATIONS CORP., LTD., Dongguan, Guangdong 523860 (CN)
(72) Inventor: YUAN, Xiao, Dongguan, Guangdong 523860 (CN); YANG, Yao, Dongguan, Guangdong 523860 (CN); ZHU, Jiacheng, Dongguan, Guangdong 523860 (CN)
(74) Representative: Grassi, Stefano
(86) International application number: PCT/CN2021/085329
(87) International publication number: WO 2021/244124

(57) **Abstract**

The present application relates to the technical field of wearable devices, and discloses a wearable device interaction method and apparatus, a wearable device, and a storage medium. The method is applied to the wearable device. The wearable device comprises a touch screen and does not comprise a physical button. When the touch screen displays a non-first-level interface, a touch operation acting on the touch screen is detected, and when the touch operation acting on the touch screen is detected to satisfy a specified condition, the touch screen is switched from displaying the non-first-level interface to displaying a first-level interface. In the present application, because no physical button is provided, the hardware cost incurred by including a physical button can be reduced, and the non-display area resulting from the inclusion of a physical button is reduced, thereby increasing the proportion of the displayable area; in addition, given that the wearable device does not comprise a physical button, switching of the display from the non-first-level interface to the first-level interface is performed by means of a touch operation satisfying a specified condition, achieving the same function as a physical button. Thus, the user experience is improved.

## Description

### CROSS REFERENCE OF RELATED APPLICATION

This application claims priority of a Chinese application No. CN202010508169.3 filed on June 05, 2020. It is hereby incorporated herein by reference for all purposes.

### TECHNICAL FIELD

The present disclosure relates to the field of wearable devices, and more particularly to a wearable device interaction method, a wearable device interaction apparatus, a wearable device, and a storage medium.

### BACKGROUND

With the development of science and technology, wearable devices are used more and more widely and have more and more functions, which has become one of necessities in people's daily life. At present, a bottom of a touch screen of the wearable device is generally equipped with a physical button, and a display interface of the wearable device is switched and controlled through the physical button.

### SUMMARY

In view of the above problem, the present disclosure proposes a wearable device interaction method, a wearable device interaction apparatus, a wearable device, and a storage medium to solve the above problem.

In a first aspect, an embodiment of the present disclosure provides a wearable device interaction method, and the method is implemented by a wearable device. The wearable device includes a touch screen. The method includes: detecting, in response to the touch screen displaying a non-primary interface, a touch-control operation acting on the touch screen; and switching, in response to the touch-control operation acting on the touch screen satisfying a target condition being detected, the touch screen from displaying the non-primary interface to displaying a primary interface.

In a second aspect, an embodiment of the present disclosure provides a wearable device interaction apparatus, and the apparatus is applied to a wearable device. The wearable device include a touch screen, and the apparatus includes: a touch-control operation detection module, configured to detect, in response to the touch screen displaying a non-primary interface, a touch-control operation acting on the touch screen; and a first switching display module, configured to switch, in response to the touch-control operation acting on the touch screen satisfying a target condition being detected, the touch screen from displaying the non-primary interface to displaying a primary interface.

In a third aspect, an embodiment of the present disclosure provides an electronic device, including a touch screen, a memory, and a processor. The touch screen and the memory are coupled to the processor, and the memory is stored with instructions, and the is configured to, when executing the instructions, implement the above method.

In a fourth aspect, an embodiment of the present disclosure provides a computer-readable storage medium, in which program codes are stored, and the program codes are configured to, when being called by a processor, implement the above method.

### BRIEF DESCRIPTION OF DRAWINGS

In order to describe technical solutions in embodiments of the present disclosure more clearly, the following briefly introduces the accompanying drawings required for describing the embodiments. Apparently, the accompanying drawings in the following description are merely some embodiments of the present disclosure. For those skilled in the art, other drawings can be obtained from these drawings without paying creative labor.
FIG. 1 illustrates a schematic flowchart of a wearable device interaction method according to an embodiment of the present disclosure.
FIG. 2 illustrates a schematic view showing a first kind of switching of a display interface of a touch screen according to the embodiment of the present disclosure.
FIG. 3 illustrates a schematic view showing a second kind of switching of the display interface of the touch screen according to the embodiment of the present disclosure.
FIG. 4 illustrates a schematic flowchart of a wearable device interaction method according to another embodiment of the present disclosure.
FIG. 5 illustrates a schematic flowchart of a block S220 of the wearable device interaction method shown in FIG. 4 of the present disclosure.
FIG. 6 illustrates a schematic view showing a third kind of switching of the display interface of the touch screen according to the embodiment of the present disclosure.
FIG. 7 illustrates a schematic view showing a fourth kind of switching of the display interface of the touch screen according to the embodiment of the present disclosure.
FIG. 8 illustrates a schematic flowchart of a wearable device interaction method according to still another embodiment of the present disclosure.
FIG. 9 illustrates a schematic flowchart of a wearable device interaction method according to even another embodiment of the present disclosure.
FIG. 10 illustrates a schematic view showing a fifth kind of switching of the display interface of the touch screen according to the embodiment of the present disclosure.
FIG. 11 illustrates a schematic view showing a sixth kind of switching of the display interface of the touch screen according to the embodiment of the present disclosure.
FIG. 12 illustrates a schematic view showing a seventh kind of switching of the display interface of the touch screen according to the embodiment of the present disclosure.
FIG. 13 illustrates a schematic view showing an eighth kind of switching of the display interface of the touch screen according to the embodiment of the present disclosure.
FIG. 14 illustrates a schematic flowchart a wearable device interaction method according to even still another embodiment of the present disclosure.
FIG. 15 illustrates a schematic view showing a ninth kind of switching of the display interface of the touch screen according to the embodiment of the present disclosure.
FIG. 16 illustrates a schematic view showing a tenth kind of switching of the display interface of the touch screen according to the embodiment of the present disclosure.
FIG. 17 illustrates a schematic module block diagram of a wearable device interaction apparatus according to an embodiment of the present disclosure.
FIG. 18 illustrates a schematic structural view of a wearable device from one perspective according to an embodiment of the present disclosure.
FIG. 19 illustrates a schematic structural view of the wearable device from another perspective according to the embodiment of the present disclosure.
FIG. 20 illustrates a schematic block diagram of the wearable device for implementing the wearable device interaction method according to the embodiment of the present disclosure.
FIG. 21 illustrates a storage unit for storing or carrying program codes implementing the wearable device interaction method according to an embodiment of the present disclosure.

### DETAILED DESCRIPTION OF EMBODIMENTS

In order to enable those skilled in the art to better understand solutions of the present disclosure, the technical solutions in the embodiments of the present disclosure will be described clearly and completely in combination with the accompanying drawings in the embodiments of the present disclosure.

At present, wearable devices on the market, such as smart watches and smart bracelets, are usually equipped with touch screens and physical buttons at the bottom of the touch screens. The touch screen can be used to display user operation interfaces, such as a dial interface, an application list and an application function interface. The physical button can be used to switch display interfaces in response to pressing operations input from external, for example, the physical button can be used to respond to external input to realize rollback of the display interface and return of the dial interface.

The physical button disposed at the bottom of the touch screen may be a capacitive physical button, a resistive physical button, etc. The physical button is usually disposed at a predetermined position at the bottom of the touch screen for sensing external touch-control operations. Taking the physical button as a capacitive physical button as an example, the capacitive physical button is made of capacitive material and disposed at a predetermined position at the bottom of the touch screen. When the human body presses the capacitive physical button, the current generated by the human body is coupled to a static capacitor, and thus the capacitance of the capacitive physical button changes. The changed capacitance can transmit and transform the signal, so that the capacitance signal can be converted into control information, so as to achieve the function of controlling the wearable device. Taking the physical button as a resistive physical button as an example, the resistive physical button is made of resistive material and disposed at a predetermined position at the bottom of the touch screen. When the human body presses the resistive physical button, the resistance of the resistive physical button changes. The change of resistance can cause the signal circuit to change, thus achieving the function of controlling the wearable device.

However, setting the physical button at the bottom of the touch screen may have the following problems. First, the physical button occupies the area of the bottom area of the touch screen, causing the overall appearance of the wearable device to be longer and affecting the aesthetics. Second, the area where the physical button is disposed at the bottom of the touch screen cannot be displayed, forming a non-display area, thereby reducing the proportion of the display area of the touch screen of the wearable device. Third, an additional physical button increases the hardware cost.

In view of the above problems, the inventor has discovered through long-term research and proposed a wearable device interaction method, a wearable device interaction apparatus, a wearable device, and a storage medium according to embodiments of the present disclosure. By not setting the physical button, the hardware cost caused by physical button can be reduced, and the non-display area caused by physical button can be reduced, so as to increase the proportion of the display area. In addition, in the case that the wearable device does not include the physical button, the switching display from a non-primary interface to a primary interface is carried out through a touch-control operation that satisfies a target condition, so as to achieve the same function as the physical button and improve the user's experience. The specific interaction method of the wearable device will be described in detail in the subsequent embodiments.

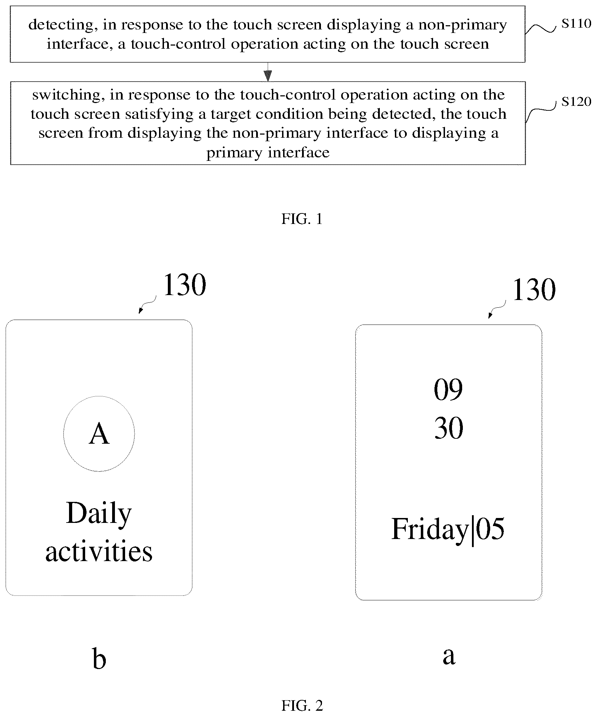

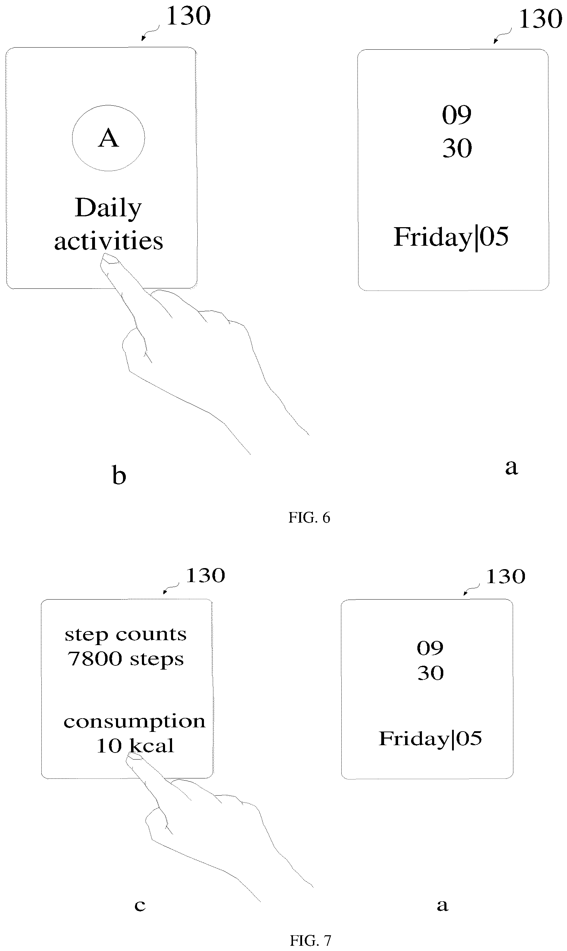

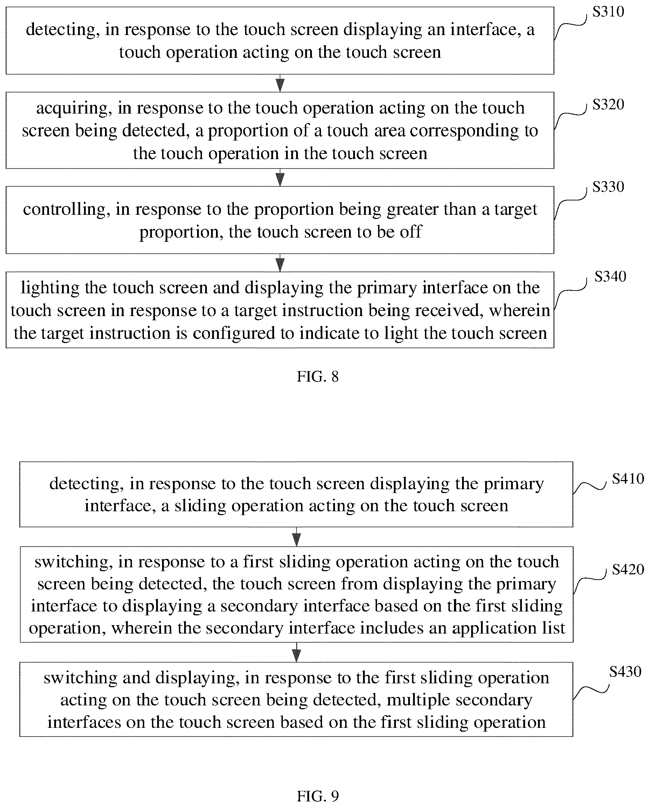

FIG. 1 illustrates a schematic flowchart of a wearable device interaction method according to an embodiment of the present disclosure. The wearable device interaction method is used for not setting the physical button, and when the touch screen displays a non-primary interface, if the touch-control operation acting on the touch screen satisfies the target condition, it can be switched to display the primary interface, so as to realize the return of the primary interface through the touch-control operation acting on the touch screen, reduce the hardware cost, improve the screen ratio and improve the user experience. In specific embodiments, the wearable device interaction method is implemented by the interaction apparatus 200 of the wearable device shown in FIG. 7 and the wearable device 100 (FIG. 8) of the interaction apparatus 200 equipped with the wearable device. The specific process of this embodiment will be described below by taking the wearable device as an example. Of course, it can be understood that the wearable device applied in this embodiment may be a bracelet, a watch, etc., which is not limited here. The process shown in FIG. 1 will be described in detail below, in this embodiment, the wearable device includes a touch screen but does not include a physical button. The wearable device interaction method may specifically include a block 5110 through a block S120 as follows.

At the block S110: detecting, in response to the touch screen displaying a non-primary interface, a touch-control operation acting on the touch screen.

In some embodiments, the wearable device may be preset with multi-level interfaces, which may include, for example, a primary interface, a secondary interface, a tertiary interface, ..., and an N-level interface. Specifically, the primary interface may refer to an interface that can be accessed without operation after the touch screen of the wearable device is lit, for example, the primary interface may refer to the interface that can be accessed without clicking, pressing, sliding, touching and other operations after the touch screen of the wearable device is lit, such as a dial interface, a lock screen interface, etc. The secondary interface may refer to an interface that can only be accessed by operating the primary interface, for example, the secondary interface may refer to the interface that can be accessed by clicking, pressing, sliding, touching and other operations on the primary interface, such as an application list interface. The tertiary interface may refer to an interface that can only be accessed by operating the secondary interface, for example, the tertiary interface may refer to the interface that can be accessed by clicking, pressing, sliding, touching and other operations on the secondary interface, such as an application type list. The quaternary interface, the fifth-level interface, ..., and the N-level interface, and so on, which will not be repeated here.

In some embodiments, the touch screen of the wearable device may display the primary interface or the non-primary interface during the use of the wearable device. Specifically, when the touch screen displays the primary interface, the dial interface may be displayed. When the touch screen displays the non-primary interface, the secondary interface, the tertiary interface, and the quaternary interface may be displayed. For example, the interface of application list or the interface of application type may be displayed, which are not limited here.

In this embodiment, when the touch screen displays the non-primary interface, the touch-control operation acting on the touch screen may be detected. In some embodiments, the touch-control operation may include a clicking operation, a pressing operation, a sliding operation, etc. Therefore, when the touch screen displays the non-primary interface, the clicking operation, the pressing operation, the sliding operation, etc. acting on the touch screen may be detected. In some embodiments, when the touch screen displays the non-primary interface, the touch-control operation acting on the touch screen may be detected in real time, the touch-control operation acting on the touch screen may be detected at a preset time interval, the touch-control operation acting on the touch screen may be detected at a preset time point, or the touch-control operation acting on the touch screen may be detected in other preset manners, which is not limited here.

At the block S120: switching, in response to the touch-control operation acting on the touch screen satisfying a target condition being detected, the touch screen from displaying the non-primary interface to displaying a primary interface.

In some embodiments, the target condition may be preset and stored in the wearable device, or may be temporarily set when the touch-control operation acting on the touch screen is detected, which is not limited herein. The target condition is used as a judgment basis for the touch-control operation acting on the touch screen. Therefore, in this embodiment, when the touch-control operation acting on the touch screen is detected, the touch-control operation may be compared with the target condition to determine whether the touch-control operation satisfies the target condition. When the judgment result indicates that the touch-control operation satisfies the target condition, the touch screen may be switched from displaying the non-primary interface to displaying the primary interface in response to the touch-control operation. When the judgment result indicates that the touch-control operation does not satisfy the target condition, the touch-control operation may not be responded to, or a response different from switching the touch screen from displaying the non-primary interface to displaying the primary interface is performed.

In some embodiments, the switching the touch screen from displaying the non-primary interface to displaying the primary interface may include: switching the touch screen from displaying the secondary interface to displaying the primary interface, switching the touch screen from displaying the tertiary interface to displaying the primary interface, and switching the touch screen from displaying the quaternary interface to displaying the primary interface, etc., which are not limited herein.

In some embodiments, the primary interface includes a dial interface. In this embodiment, when it is detected that the touch-control operation acting on the touch screen satisfies the target condition, the touch screen may be switched from displaying the non-primary interface to displaying the dial interface. For example, if the non-primary interface is an application list interface, when it is detected that the touch-control operation acting on the touch screen satisfies the target condition, the touch screen may be switched from displaying the application list interface to displaying the dial interface. If the non-primary interface is an application type interface, when it is detected that the touch-control operation acting on the touch screen satisfies the target condition, the touch screen may be switched from displaying the application type interface to displaying the dial interface.

FIG. 2 illustrates a schematic view showing a first kind of switching of a display interface of the touch screen according to the embodiment of the present disclosure. As shown in FIG. 2, the interface a shown in FIG. 2 is the primary interface and the interface b is the secondary interface. When the touch screen displays the interface b, if it is detected that the touch-control operation acting on the touch screen satisfies the target condition, the touch screen is switched from displaying the interface b to displaying the interface a.

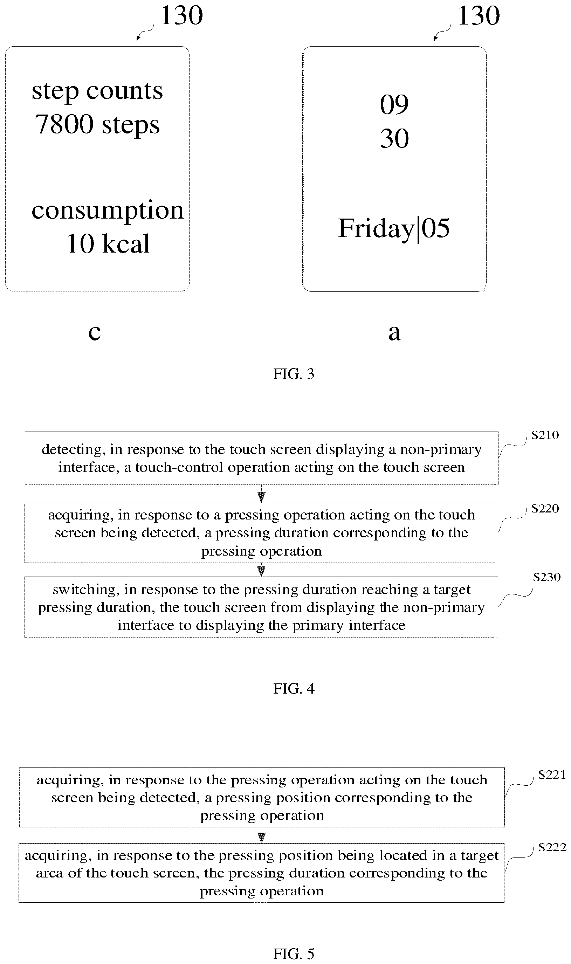

FIG. 3 illustrates a schematic view showing a second kind of switching of the display interface of the touch screen according to the embodiment of the present disclosure. As shown in FIG. 3, the interface a shown in FIG. 3 is the primary interface and the interface c is the tertiary interface. When the touch screen displays the interface c, if it is detected that the touch-control operation acting on the touch screen satisfies the target condition, the touch screen is switched from displaying the interface c to displaying the interface a.

The wearable device interaction method provided by one embodiment of the present disclosure is implemented by the wearable device that includes a touch screen and does not include a physical button. Since the physical button is not set, the hardware cost caused by the physical button can be reduced, and the non-display area caused by the physical button can be reduced, so as to increase the proportion of the display area. In addition, when the touch screen displays the non-primary interface, the touch-control operation acting on the touch screen is detected, and when the touch-control operation acting on the touch screen is detected to satisfy the target condition, the touch screen is switched from displaying the non-primary interface to displaying the primary interface, so that when the wearable device does not include physical button, the non-primary interface can be switched to the primary interface through the touch-control operation satisfying the target condition, thereby achieving the same function as the physical button and improving the user's experience.

FIG. 4 a schematic flowchart of a wearable device interaction method according to another embodiment of the present disclosure. The method is implemented by the above wearable device, which includes a touch screen and does not include a physical button. The following will describe the process shown in FIG. 4 in detail. The wearable device interaction method may specifically include a block S210 through a block S230 as follows.

At the block S210: detecting, in response to the touch screen displaying a non-primary interface, a touch-control operation acting on the touch screen.

For the detailed description of the block S210, please refer to the block S110, which is not described here.

At the block S220: acquiring, in response to a pressing operation acting on the touch screen being detected, a pressing duration corresponding to the pressing operation.

In some embodiments, the touch-control operation may include a pressing operation, and the target condition may include a target pressing duration. Therefore, in this embodiment, when the pressing operation acting on the touch screen is detected, the pressing duration corresponding to the pressing operation can be obtained to determine whether the touch-control operation satisfies the target condition by determining whether the pressing duration corresponding to the pressing operation satisfies the target pressing duration. As an implementation, the timing is started when the pressing operation acting on the touch screen is detected, and the timing accumulated when the continuous pressing operation is detected to obtain the pressing duration corresponding to the pressing operation.

In some embodiments, in order to reduce the probability of misoperation, the judgment basis of the pressing force may be set. In this embodiment, a target pressing force may be set as the judgment basis of pressing force, and the target pressing force may be preset and stored in the wearable device or may be temporarily set when the pressing operation acting on the touch screen is detected, which is not limited herein. As an implementation, when the pressing operation acting on the touch screen is detected, the pressing force corresponding to the pressing operation can be obtained, and the obtained pressing force is compared with the target pressing force to judge whether the pressing force is greater than the target pressing force. When the judgment result indicates that the pressing force is greater than the target pressing force, the pressing duration corresponding to the pressing operation can be obtained, and when the judgment result indicates that the pressing force is not greater than the target pressing force, the corresponding pressing operation can be ignored, or a response different from acquiring the pressing duration corresponding to the pressing operation can be performed.

FIG. 5 illustrates a schematic flowchart of a block S220 of the wearable device interaction method shown in FIG. 4 of the present disclosure. The process shown in FIG. 5 will be described in detail below. The method can specifically include a block S221 through a block S222 as follows.

At the block S221: acquiring, in response to the pressing operation acting on the touch screen being detected, a pressing position corresponding to the pressing operation.

In some embodiments, the wearable device may set a target area on the touch screen, and the target area is used to trigger the touch screen to switch from displaying the non-primary interface to displaying the primary interface. That is, when the pressing position corresponding to the pressing operation is within the target area of the touch screen, the touch screen is triggered to switch from displaying the non-primary interface to displaying the primary interface. When the pressing position corresponding to the pressing operation is not within the target area of the touch screen, the touch screen is not be triggered to switch from displaying the non-primary interface to displaying the primary interface.

In this embodiment, when the pressing operation on the touch screen is detected, the pressing position corresponding to the pressing operation can be obtained to determine whether the touch-control operation satisfies the requirement of triggering the touch screen to switch from displaying the non-primary interface to displaying the primary interface by determining whether the pressing position is within the target area of the touch screen. As an implementation, a coordinate system is established by taking a center of the touch screen as an origin. When the pressing operation on the touch screen is detected, the coordinate information of the pressing operation in the coordinate system can be obtained, and the pressing position corresponding to the pressing operation can be obtained based on the coordinate information.

At the block S222: acquiring, in response to the pressing position being located in a target area of the touch screen, the pressing duration corresponding to the pressing operation.

In this embodiment, after obtaining the pressing position corresponding to the pressing operation, the pressing position may be compared with the target area to determine whether the pressing position is located in the target area of the touch screen. When the judgment result indicates that the pressing position is within the pressing area of the touch screen, the pressing duration corresponding to the pressing operation can be obtained; and when the judgment result indicates that the pressing position is not within the pressing area of the touch screen, the corresponding touch-control operation may not be responded to, or the response different from acquiring the pressing duration corresponding to the pressing operation may be performed.

In some embodiments, the target area may correspond to a coordinate range in the coordinate system. After the coordinate information of the pressing position corresponding to the pressing operation in the coordinate system is obtained, it can be determined whether the coordinate information of the pressing position is within the coordinate range. When the coordinate information of the pressing position is within the coordinate range, it can be determined that the pressing position is within the target area of the touch screen, and the pressing duration corresponding to the pressing operation can be obtained. When the coordinate information of the pressing position is not within the coordinate range, it can be determined that the pressing position is outside the target area of the touch screen, the corresponding touch-control operation may not be responded to, or the response different from acquiring the pressing duration corresponding to the pressing operation may be performed.

At the block S230: switching, in response to the pressing duration reaching a target pressing duration, the touch screen from displaying the non-primary interface to displaying the primary interface.

In some embodiments, the target pressing duration may be preset and stored in the wearable device, or may be temporarily set when the pressing operation acting on the touch screen is detected, which is not limited herein. The target pressing duration is used as the judgment basis for the pressing duration of the pressing operation acting on the touch screen. Therefore, in this embodiment, when the pressing duration corresponding to the pressing operation acting on the touch screen is detected, the pressing duration corresponding to the pressing operation may be compared with the target pressing duration to judge whether the pressing duration corresponding to the pressing operation reaches the target pressing duration. In this embodiment, when the judgment result indicates that the pressing duration corresponding to the pressing operation reaches the target pressing duration, it can be determined that the touch-control operation satisfies the target condition, the touch screen is switched from displaying the non-primary interface to displaying the primary interface in response to the pressing operation; and when the judgment result indicates that the pressing duration corresponding to the pressing operation does not reach the target pressing duration, it can be determined that the touch-control operation does not meet the target condition, then the pressing operation may not be responded, or the response different from that of switching the touch screen from displaying the non-primary interface to displaying the primary interface is performed.

In some embodiments, a preset pressing duration may be set, the preset pressing duration may be preset and stored in the wearable device, or may be temporarily set when the touch screen switches from displaying the non-primary interface to displaying the primary interface, which is not limited herein. In this embodiment, the preset pressing duration is greater than the target pressing duration. The preset pressing duration is used as the judgment basis for the pressing duration corresponding to the pressing operation on the touch screen. Therefore, in this embodiment, after the touch screen switches from displaying the non-primary interface to displaying the primary interface, if the pressing operation is still continuously detected, the pressing duration corresponding to the pressing operation can be continuously obtained, and the pressing duration and the preset pressing duration are compared to determine whether the pressing duration is greater than the preset pressing duration. When the judgment result indicates that the pressing duration is greater than the preset pressing duration, the touch screen may be locked to achieve quick operation of locking the screen.

FIG. 6 illustrates a schematic view showing a third kind of switching of the display interface of the touch screen according to the embodiment of the present disclosure. As shown in FIG. 6, the interface a shown in FIG. 6 is a primary interface and the interface b is a secondary interface. When the touch screen displays the interface b, if it is detected that the pressing duration corresponding to the pressing operation acting on the touch screen reaches the target pressing duration, the touch screen switches from displaying the interface b to displaying the interface a.

FIG. 7 illustrates a schematic view showing a fourth kind of switching of the display interface of the touch screen according to the embodiment of the present disclosure. As shown in FIG. 7, the interface a shown in FIG. 7 is a primary interface and the interface c is a tertiary interface. When the touch screen displays the interface c, if it is detected that the pressing duration corresponding to the pressing operation acting on the touch screen reaches the target pressing duration, the touch screen switches from displaying the interface c to displaying the interface a.

The wearable device interaction method provided by the embodiment of the present disclosure is implemented by the wearable device that includes the touch screen and does not include the physical button. Since the physical button is not set, the hardware cost caused by the physical button can be reduced, and the non-display area caused by the physical button can be reduced, so as to increase the proportion of the display area. In addition, when the touch screen displays the non-primary interface, the touch-control operation acting on the touch screen is detected, and when the pressing operation acting on the touch screen is detected, the pressing duration corresponding to the pressing operation is obtained. When the pressing duration reaches the target pressing duration, the touch screen is switched from displaying the non-primary interface to displaying the primary interface, so that when the wearable device does not include the physical button, the switching from displaying the non-primary interface to displaying the primary interface is performed when the pressing duration corresponding to the pressing operation reaches the target pressing duration, thereby achieving the same function as the physical button and improving the user's experience.

FIG. 8 illustrates a schematic flowchart of a wearable device interaction method according to still another embodiment of the present disclosure. The method is implemented by the above wearable device, and the wearable device includes a touch screen and does not include a physical button. The process shown in FIG. 8 will be described in detail below. The wearable device interaction method may specifically include a block S310 through a block S340 as follows.

At the block S310: detecting, in response to the touch screen displaying an interface, a touch operation acting on the touch screen.

In some embodiments, during the use of the wearable device, the touch screen of the wearable device may display the interface selected from the group consisting of the primary interface, the secondary interface, the tertiary interface,..., and the N-level interface. In this embodiment, when the touch screen displays the interface, the touch operation acting on the touch screen may be detected. In some embodiments, the touch operation may include a clicking operation, a pressing operation, a sliding operation, etc. Therefore, when the touch screen displays the interface, the clicking operation, the pressing operation, the sliding operation, etc. acting on the touch screen may be detected. In some embodiments, when the touch screen displays the interface, the touch operation acting on the touch screen may be detected in real time, the touch operation acting on the touch screen may be detected at a preset time interval, the touch operation acting on the touch screen may be detected at a preset time point, or the touch operation acting on the touch screen can be detected in other preset manners, which is not limited here.

At the block S320: acquiring, in response to the touch operation acting on the touch screen being detected, a proportion of a touch area corresponding to the touch operation in the touch screen.

In this embodiment, when the touch operation acting on the touch screen is detected, the proportion of the touch area corresponding to the touch operation in the touch screen may be obtained.

In some embodiments, when the touch operation acting on the touch screen is detected, the touch area corresponding to the touch operation may be acquired. Based on the calculation of the touch area and the known touch screen area, the proportion of the touch area corresponding to the touch operation in the touch screen may be acquired.

In some embodiments, a coordinate system may be established on the touch screen. For example, the coordinate system may be established with a center of the touch screen as an origin. When the touch operation acting on the touch screen is detected, multiple touch points corresponding to the touch operation acting on the touch screen may be acquired, the coordinate information of the multiple touch points in the coordinate system may be acquired, and the touch area corresponding to the touch operation is formed by enclosing based on the coordinate information of the multiple touch points in the coordinate system. The area of the touch area is calculated based on the coordinate information of the multiple touch points in the coordinate system, and the proportion of the touch area corresponding to the touch operation to the touch screen is obtained by calculating based on the area of the touch area and the known area of the touch screen.

At the block S330: controlling, in response to the proportion being greater than a target proportion, the touch screen to be off.

In some embodiments, the target proportion may be preset and stored in the wearable device, or may be temporarily set when the touch operation acting on the touch screen is detected, which is not limited here. Specifically, the target proportion is used as the judgment basis for the proportion of the touch area corresponding to the touch operation in the touch screen. Therefore, in this embodiment, when the proportion of the touch area corresponding to the touch operation in the touch screen is obtained, the proportion of the touch area corresponding to the touch operation in the touch screen may be compared with the target proportion to determine whether the proportion of the touch area corresponding to the touch operation in the touch screen is greater than the target proportion. In this embodiment, when the judgment result indicates that the proportion of the touch area corresponding to the touch operation in the touch screen is greater than the target proportion, the touch screen can be controlled to be off in response to the touch operation; and when the judgment result indicates that the proportion of the touch area corresponding to the touch operation in the touch screen is not greater than the target proportion, the corresponding touch operation may not be responded to, or the response different from the controlling of off of the touch screen may be performed.

At the block S340: lighting the touch screen and displaying the primary interface on the touch screen in response to a target instruction being received, wherein the target instruction is configured to indicate to light the touch screen.

In some embodiments, after the touch screen is turned off, if the target instruction indicating that the screen is on is received, the touch screen may be turned on and the primary interface may be displayed on the touch screen in response to the target instruction. That is, no matter whether the touch screen displays the primary interface before the screen is turned off, the touch screen displays the primary interface after the screen is turned off and turned on again.

In some embodiments, the wearable device may set a target duration, and the target duration may be preset and stored in the wearable device, or may be temporarily set after the touch screen is off, which is not limited herein. Specifically, the target duration is used as the judgment basis for a duration of the touch screen off. Therefore, in this embodiment, if the target instruction indicating that the touch screen is on is received after the touch screen is off, the time to receive the target instruction may be obtained, the duration between the time receiving the target instruction and the time when the touch screen is off may be calculated, and the duration between the time receiving the target instruction and the time when the touch screen is off may be compared with the target duration, so as to determine whether the duration between the time receiving the target instruction and the time when the touch screen is off is greater than the target duration. When the judgment result indicates that the duration between the time receiving the target instruction and the time when the touch screen is off is greater than the target duration, the primary interface may be displayed on the touch screen in response to the instruction; and when the judgment result indicates that the duration between the time receiving the target instruction and the time when the touch screen is off is not greater than the target duration, the interface displayed before the touch screen is off may be displayed on the touch screen in response to the instruction.

The wearable device interaction method provided by the embodiment of the present disclosure is implemented the wearable device that includes the touch screen and does not include the physical button. Since the physical button is not set, the hardware cost caused by the physical button can be reduced, and the non-display area caused by the physical button can be reduced, so as to increase the proportion of the display area. In addition, when any interface is displayed on the touch screen, the touch operation acting on the touch screen is detected. When the touch operation acting on the touch screen is detected, the proportion of the touch area corresponding to the touch operation in the touch screen is obtained. When the proportion is greater than the target proportion, the touch screen is controlled to turn off the screen. When the target instruction for indicating the screen on is received, the touch screen is turned on and the primary interface is displayed on the touch screen, Thus, the touch screen is turned off when any interface is detected that the proportion of the touch area in the touch screen is greater than the target proportion, thereby improving the screen off efficiency, and the primary interface is displayed when the touch screen is turned on again, so as to better meet the use requirements of users.

FIG. 9 illustrates a schematic flowchart of a wearable device interaction method according to even another embodiment of the present disclosure. The method is implemented by the above wearable device, and the wearable device includes a touch screen and does not include a physical button. The process shown in FIG. 9 will be described in detail below. The wearable device interaction method may specifically include a block S410 through a block S430 as follows.

At the block S410: detecting, in response to the touch screen displaying the primary interface, a sliding operation acting on the touch screen.

In some embodiments, during the use of the wearable device, the touch screen of the wearable device may display any of the primary interface, the secondary interface, the tertiary interface,..., and the N-level interface. In this embodiment, when the touch screen displays the primary interface, the sliding operation acting on the touch screen may be detected. In some embodiments, when the touch screen displays the primary interface, the sliding operation acting on the touch screen may be detected in real time, the sliding operation acting on the touch screen may be detected at a preset time interval, the sliding operation acting on the touch screen may be detected at a preset time point, or the sliding operation acting on the touch screen may be detected in other preset manners, which is not limited here.

At the block S420: switching, in response to a first sliding operation acting on the touch screen being detected, the touch screen from displaying the primary interface to displaying a secondary interface based on the first sliding operation, wherein the secondary interface includes an application list.

In this embodiment, when it is detected that the sliding operation acting on the touch screen is the first sliding operation, the touch screen may be switched from displaying the primary interface to displaying the secondary interface based on the first sliding operation, and the secondary interface includes the application list. For example, when it is detected that the sliding operation acting on the touch screen is the first sliding operation, the touch screen may be switched from displaying the dial interface to displaying the application list interface based on the first sliding operation.

In some embodiments, the first sliding operation may be preset and stored in the wearable device, or may be temporarily set when the sliding operation acting on the touch screen is detected, which is not limited here. Specifically, the first sliding operation is used as the judgment basis for the sliding operation acting on the touch screen. Therefore, in this embodiment, when the sliding operation acting on the touch screen is detected, the sliding operation acting on the touch screen may be compared with the first sliding operation to determine whether the sliding operation acting on the touch screen is the first sliding operation, When the judgment result indicates that the sliding operation acting on the touch screen is the first sliding operation, the touch screen may be switched from displaying the primary interface to displaying the secondary interface based on the sliding operation.

In some embodiments, the first sliding operation may be a sliding operation acting on the touch screen along a first target direction or a second target direction, the first target direction is opposite to the second target direction, and both the first target direction and the second target direction are parallel to an axial direction of the touch screen.

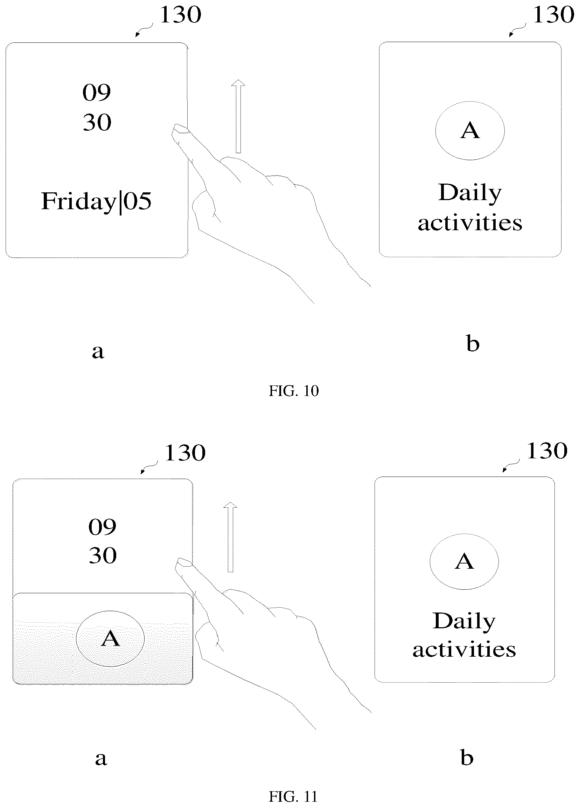

FIG. 10 illustrates a schematic view showing a fifth kind of switching of the display interface of the touch screen according to the embodiment of the present disclosure. As shown in FIG. 10, the interface a shown in FIG. 10 is a primary interface, and the interface b is a secondary interface. When the interface a is displayed on the touch screen, if the first sliding operation acting on the touch screen is detected (sliding upward as shown in the figure), the touch screen is switched from displaying the interface a to displaying the interface b.

In some embodiments, when the first sliding operation acting on the touch screen is detected, a floating layer may be superimposed on the primary interface based on the first sliding operation, and the secondary interface may be displayed on the floating layer. As an implementation, when the sliding operation acting on the touch screen upward along the axial direction of the touch screen is detected, the wearable device generates a floating layer on the primary interface as a response, and the floating layer may be superimposed and displayed on a partial area of the primary interface during generated, and sequentially superimposed and displayed on an entire area of the primary interface based on the first sliding operation. It can be understood that the floating layer is used to separate the primary interface from the secondary interface to hide the primary interface.

FIG. 11 illustrates a schematic view showing a sixth kind of switching of the display interface of the touch screen according to the embodiment of the present disclosure. As shown in FIG. 11, the interface a shown in FIG. 11 is a primary interface and the interface b is a secondary interface. When the interface a is displayed on the touch screen, if the first sliding operation (upward sliding as shown in the figure) acting on the touch screen is detected, the floating layer is superimposed on the primary interface and the interface b is displayed on the floating layer.

At the block S430: switching and displaying, in response to the first sliding operation acting on the touch screen being detected, multiple secondary interfaces on the touch screen based on the first sliding operation.

In this embodiment, the number of secondary interfaces is multiple, for example, the application list of the secondary interface includes multiple application icons, and each application icon of the multiple application icons corresponds to a secondary interface. Therefore, in some embodiments, when the touch screen is switched from displaying the primary interface to displaying the secondary interface and keeps displaying the secondary interface, multiple secondary interfaces may be switched to display on the touch screen based on the sliding operation when the first sliding operation acting on the touch screen is detected.

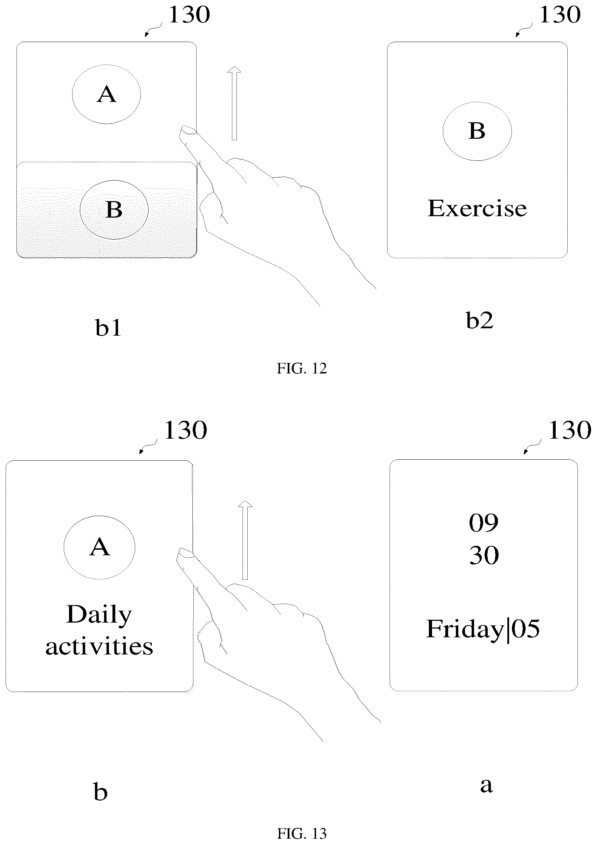

FIG. 12 illustrates a schematic view showing a seventh kind of switching of the display interface of the touch screen according to the embodiment of the present disclosure. As shown in FIG. 12, the interface bl shown in FIG. 12 is a secondary interface, and the interface b2 is another secondary interface. When the touch screen displays the interface b1, if the first sliding operation acting on the touch screen is detected (sliding upward as shown in the figure), the touch screen is switched from displaying the interface bl to displaying the interface b2.

In some embodiments, the touch screen is switched from displaying the primary interface to displaying the secondary interface, and keeps displaying the switched secondary interface, or when the multiple secondary interfaces are switched to be displayed, if the first sliding operation acting on the touch screen continues to be detected, the touch screen may be switched from displaying the secondary interface to displaying the primary interface based on the sliding operation. Specifically, when the number of secondary interfaces is one, after the touch screen is switched from displaying the primary interface to displaying the secondary interface, if the first sliding operation acting on the touch screen is detected, it can be directly switched from displaying the secondary interface to displaying the primary interface. When the number of secondary interfaces is multiple, after the touch screen is switched from displaying the primary interface to displaying the secondary interface, if the first sliding operation acting on the touch screen is detected, multiple secondary interfaces may be displayed successively based on the first sliding operation, and after the multiple secondary interfaces are completely displayed, the secondary interface may be switched from displaying the secondary interface to displaying the primary interface.

FIG. 13 illustrates a schematic view showing an eighth kind of switching of the display interface of the touch screen according to the embodiment of the present disclosure. As shown in FIG. 13, the interface a shown in FIG. 13 is a primary interface and the interface b is a secondary interface. When the interface b is displayed on the touch screen, if the first sliding operation acting on the touch screen is detected (sliding upward as shown in the figure), the touch screen is switched from displaying the interface b to displaying the interface a.

The wearable device interaction method provided by the embodiment of the present disclosure is implemented by the wearable device that includes the touch screen and does not include the physical button. Since the physical button is not set, the hardware cost caused by the physical button can be reduced, and the non-display area caused by the physical button can be reduced, so as to increase the proportion of the display area. In addition, when the touch screen displays the primary interface, the sliding operation acting on the touch screen is detected. When the first sliding operation acting on the touch screen is detected, the touch screen is switched from displaying the primary interface to displaying the secondary interface based on the first sliding operation, and the secondary interface includes the application list. When the first sliding operation acting on the touch screen is detected, the multiple secondary interfaces are switched and displayed on the touch screen based on the first sliding operation, so that the switching and displaying from the primary interface to the secondary interface and the switching and displaying of the multiple secondary interfaces are realized through the first sliding operation, and the convenience of switching operation is improved.

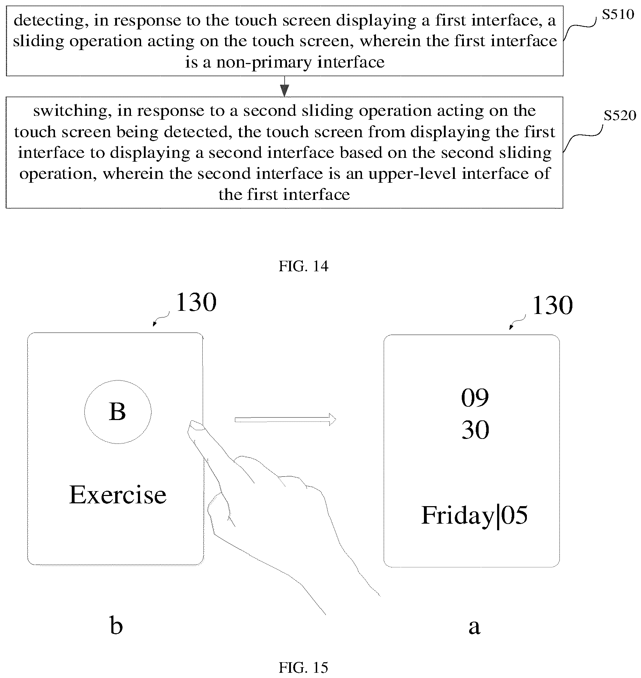

FIG. 14 illustrates a schematic flowchart a wearable device interaction method according to even still another embodiment of the present disclosure. The method is implemented by the above wearable device, and the wearable device includes a touch screen and does not include a physical button. The process shown in FIG. 14 will be described in detail below. The wearable device interaction method may specifically include a block S510 through a block S520 as follows.

At the block S510: detecting, in response to the touch screen displaying a first interface, a sliding operation acting on the touch screen, wherein the first interface is a non-primary interface.

In some embodiments, during the use of the wearable device, the touch screen of the wearable device may display any of the primary interface, the secondary interface, the tertiary interface,..., and the N-level interface. In this embodiment, when the touch screen displays the first interface, the sliding operation acting on the touch screen may be detected, and the first interface is the non-primary interface. In some embodiments, when the touch screen displays the first interface, the sliding operation acting on the touch screen may be detected in real time, the sliding operation acting on the touch screen may be detected at a preset time interval, the sliding operation acting on the touch screen may be detected at a preset time point, or the sliding operation acting on the touch screen may be detected in other preset manners, which is not limited here.

At the block S520: switching, in response to a second sliding operation acting on the touch screen being detected, the touch screen from displaying the first interface to displaying a second interface based on the second sliding operation, wherein the second interface is an upper-level interface of the first interface.

In this embodiment, when it is detected that the sliding operation acting on the touch screen is the second sliding operation, the touch screen may be switched from displaying the first interface to displaying the second interface based on the second sliding operation, and the second interface is the upper-level interface of the first interface. For example, when it is detected that the sliding operation acting on the touch screen is the second sliding operation, the touch screen may be switched from displaying the application type interface to displaying the application list interface based on the second sliding operation.

In some embodiments, the second sliding operation may be preset and stored in the wearable device, or may be temporarily set when the sliding operation acting on the touch screen is detected, which is not limited here. Specifically, the second sliding operation is used as the judgment basis for the sliding operation acting on the touch screen. Therefore, in this embodiment, when the sliding operation acting on the touch screen is detected, the sliding operation acting on the touch screen may be compared with the second sliding operation to determine whether the sliding operation acting on the touch screen is the second sliding operation. When the judgment result indicates that the sliding operation acting on the touch screen is the second sliding operation, the touch screen may be switched from displaying the first interface to displaying the second interface based on the sliding operation to realize the return of the display interface.

In some embodiments, the second sliding operation may be the sliding operation acting on the touch screen along a third target direction or a fourth target direction, the third target direction is opposite to the fourth target direction, and both the first target direction and the second target direction are perpendicular to the axial direction of the touch screen.

FIG. 15 illustrates a schematic view showing a ninth kind of switching of the display interface of the touch screen according to the embodiment of the present disclosure. As shown in FIG. 15, the interface b shown in FIG. 15 is a secondary interface, and the interface a is a primary interface. When the interface b is displayed on the touch screen, if the second sliding operation acting on the touch screen is detected (shown sliding to the right), the touch screen is switched from displaying the interface b to displaying the interface a.

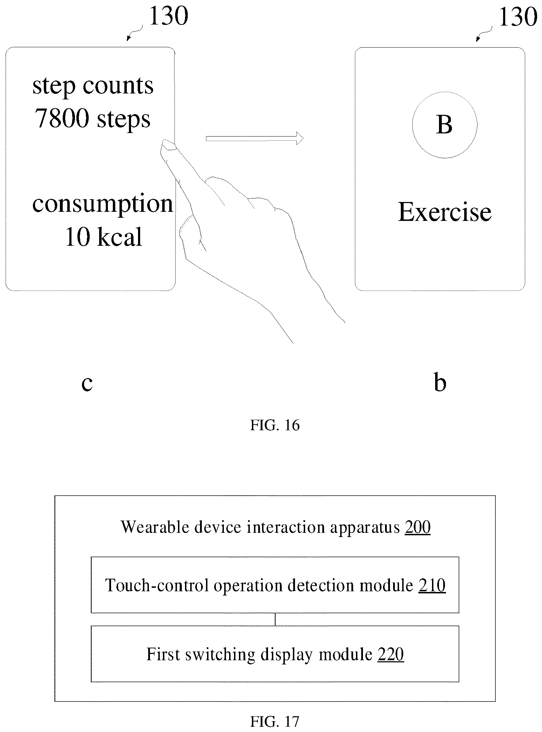

FIG. 16 illustrates a schematic view showing a tenth kind of switching of the display interface of the touch screen according to the embodiment of the present disclosure. As shown in FIG. 16, the interface c shown in FIG. 16 is a tertiary interface and the interface b is a secondary interface. When the interface c is displayed on the touch screen, if the second sliding operation acting on the touch screen is detected (shown sliding to the right), the touch screen is switched from displaying the interface c to displaying the interface b.

The wearable device interaction method provided by the embodiment of the present disclosure is implemented by the wearable device that includes the touch screen and does not include the physical button. Since the physical button is not set, the hardware cost caused by the physical button can be reduced, and the non-display area caused by the physical button can be reduced, so as to increase the proportion of the display area. In addition, when the touch screen displays the first interface, the sliding operation acting on the touch screen is detected, and the first interface is the non-primary interface. When the second sliding operation acting on the touch screen is detected, the touch screen is switched from displaying the first interface to displaying the second interface based on the second sliding operation, and the second interface is the upper-level interface of the first interface. Thus, the secondary interface can be returned back through the second sliding operation to improve the convenience of the return operation.

FIG. 17 illustrates a schematic module block diagram of a wearable device interaction apparatus 200 according to an embodiment of the present disclosure. The wearable device interaction apparatus 200 the is applied to the wearable device. The wearable device includes a touch screen and does not include a physical button. The block diagram shown in FIG. 17 will be described below. The interaction apparatus 200 of the wearable device includes a touch-control operation detection module 210 and a first switching display module 220.

The touch-control operation detection module 210 is used to detect, in response to the touch screen displaying a non-primary interface, a touch-control operation acting on the touch screen.

The first switching display module 220 is used to switch, in response to the touch-control operation acting on the touch screen satisfying a target condition being detected, the touch screen from displaying the non-primary interface to displaying a primary interface.

In an embodiment, the first switching display module 220 includes: a pressing duration acquisition sub module and a first switching display sub module.

Specifically, the pressing duration acquisition sub module is used to acquire, in response to a pressing operation acting on the touch screen being detected, a pressing duration corresponding to the pressing operation.

In an embodiment, the pressing duration acquisition sub module includes a pressing position acquisition unit and a pressing duration acquisition unit.

Specifically, the pressing position acquisition unit is used to acquire, in response to the pressing operation acting on the touch screen being detected, a pressing position corresponding to the pressing operation.

The pressing duration acquisition unit is used to acquire, in response to the pressing position being located in a target area of the touch screen, the pressing duration corresponding to the pressing operation.

The first switching display sub module is used to switch, in response to the pressing duration reaching a target pressing duration, the touch screen from displaying the non-primary interface to displaying the primary interface.

In an embodiment, the first switching display module 220 further includes a dial interface display sub module.

Specifically, the dial interface display sub module is used to switch, in response to the touch-control operation acting on the touch screen satisfying the target condition being detected, the touch screen from displaying the non-primary interface to displaying the dial interface.

In an embodiment, the wearable device interaction apparatus 200 further includes a touch operation detection module, a proportion acquisition module, and an off-screen control module.

Specifically, the touch operation detection module is used to detect, in response to the touch screen displaying an interface, a touch operation acting on the touch screen.

The proportion acquisition module is used to acquire, in response to the touch operation acting on the touch screen being detected, a proportion of a touch area corresponding to the touch operation in the touch screen.

The off-screen control module is used to control, in response to the proportion being greater than a target proportion, the touch screen to be off.

In an embodiment, the wearable device interaction apparatus 200 further includes a touch screen lighting module.

Specifically, the touch screen lightening module is used to light the touch screen and display the primary interface on the touch screen when receiving a target instruction, and the target instruction is used to indicate to light the touch screen.

In an embodiment, the wearable device interaction apparatus 200 further includes a first sliding operation detection module and a second switching display module.

The first sliding operation detection module is used to detect, in response to the touch screen displaying the primary interface, a sliding operation acting on the touch screen.

The second switching display module is used to switch, in response to a first sliding operation acting on the touch screen being detected, the touch screen from displaying the primary interface to displaying a secondary interface based on the first sliding operation, and the secondary interface includes an application list.

In an embodiment, the second switching display module includes: a second switching display sub module.

Specifically, the second switching display sub module is used to superimpose, in response to the first sliding operation acting on the touch screen being detected, a floating layer on the primary interface based on the first sliding operation, and display the secondary interface on the floating layer.

In an embodiment, the wearable device interaction apparatus 200 further includes a secondary interface switching display module.

Specifically, the secondary interface switching display module is used to switch and display, in response to the first sliding operation acting on the touch screen being detected, multiple secondary interfaces on the touch screen based on the first sliding operation.

In an embodiment, the wearable device interaction apparatus 200 further includes a second sliding operation detection module and a third switching display module.

Specifically, the second sliding operation detection module is used to detect, in response to the touch screen displaying a first interface, a second sliding operation acting on the touch screen, and the first interface is a non-primary interface.

The third switching display module is used to switch, in response to the second sliding operation acting on the touch screen being detected, the touch screen from displaying the first interface to displaying a second interface based on the second sliding operation, and the second interface is an upper-level interface of the first interface.

Those skilled in the art can clearly understand that, for the convenience and simplicity of description, the specific working process of the apparatus and modules described above may refer to the corresponding processes in the above method embodiments, and will not be repeated here.

In several embodiments provided in the present disclosure, the modules may be coupled to each other electrically, mechanically, or in other forms.

In addition, respective functional modules in each embodiment of the present disclosure may be integrated into one processing module, or the respective modules may physically exist independently, or two or more modules may be integrated into one module. The above integrated modules may be implemented in the form of hardware or software function modules.

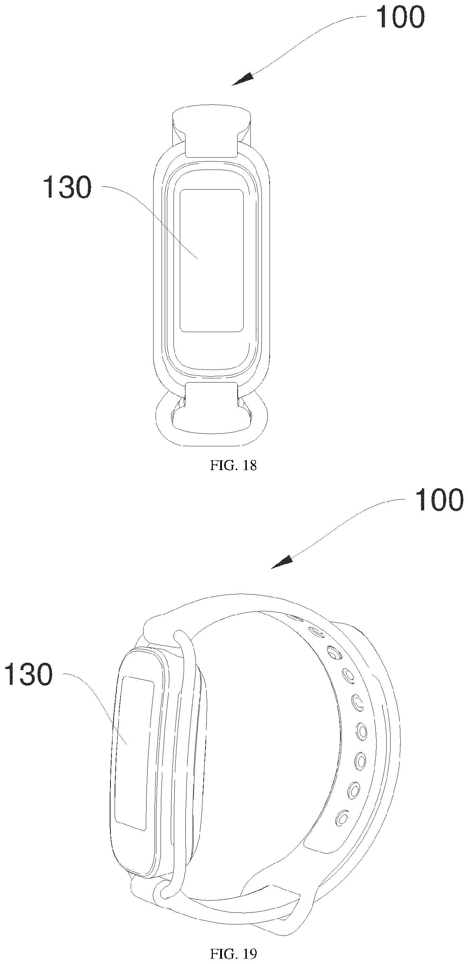

FIG. 18 illustrates a schematic structural view of a wearable device from one perspective according to an embodiment of the present disclosure, and FIG. 19 illustrates a schematic structural view of the wearable device from another perspective according to the embodiment of the present disclosure. As shown in FIG. 18 and FIG. 19, the wearable device 100 provided in the embodiment of the present disclosure includes a touch screen 130.

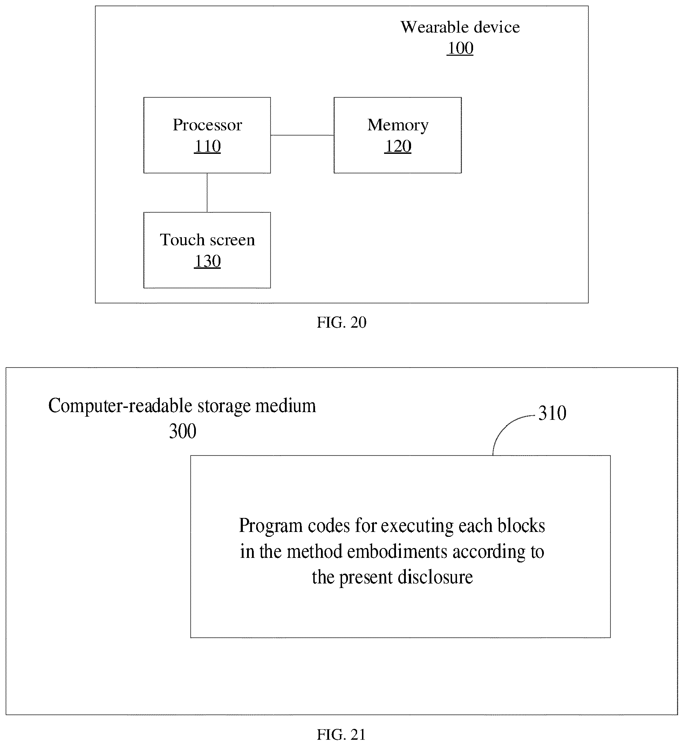

FIG. 20 illustrates a schematic block diagram of the wearable device for implementing the wearable device interaction method according to the embodiment of the present disclosure. The wearable device 100 may be an electronic device capable of running applications, such as a smart phone, a tablet computer, an e-book, and the like. The wearable device 100 in the present disclosure may include one or more of the following components: a processor 110, a memory 120, the touch screen 130, and one or more applications, the one or more applications may be stored in the memory 120 and configured to be executed by one or more processors 110, and one or more programs are configured to execute the method described in the foregoing method embodiments.

The processor 110 may include one or more processing cores. The processor 110 is connected to various components of the entire wearable device 100 using various interfaces and wires, and performs various functions of the wearable device 100 and processes data by running or executing instructions, programs, code sets, or instruction sets stored in the memory 120 and calling data stored in the memory 120. Alternatively, the processor 110 may be implemented in at least one hardware form of a digital signal processing (DSP), a field-programmable gate array (FPGA), and a programmable logic array (PLA). The processor 110 may integrate a combination of one or more of a central processing unit (CPU), a graphics processing unit (GPU), a modem, etc. Specifically, the CPU mainly deals with an operating system, a user interface, and an application program, etc., the GPU responsible for the rendering and drawing of the content to be displayed, and the modem is used to handle wireless communications. It can be understood that the above modem may also be implemented independently by a communication chip without being integrated into the processor 110.

The memory 120 may include a random access memory (RAM) or a read-only memory. The memory 120 may be used to store instructions, programs, codes, code sets, or instruction sets. The memory 120 may include a storage program area and a storage data area. Specifically, the storage program area may store instructions for implementing an operating system, instructions for implementing at least one function (such as touch function, sound playing function, image playing function, etc.), and instructions for implementing the following embodiments of methods, etc. The storage data area may also store data (such as phonebook, audio and video data, chat record data) created during the use of the wearable device 100.

The touch screen 130 is used to display information input by the user, information provided to the user and various graphical user interfaces of the wearable device 100. These graphical user interfaces may be composed of graphics, text, icons, numbers, videos and any combination thereof. In one embodiment, the touch screen 130 may be a liquid crystal display (LCD), and may also be an organic light-emitting diode (OLED), which is not limited here.

FIG. 21 illustrates a storage unit for storing or carrying program codes implementing the wearable device interaction method according to an embodiment of the present disclosure. The computer-readable medium 300 stores program codes, and the program codes may be called by the processor to execute the method described in the above method embodiments.

The computer-readable storage medium 300 may be an electronic memory such as a flash memory, an electrically-erasable programmable read-only memory (EEPROM), an erasable programmable read only memory (EPROM), a hard disk, or a ROM. Alternatively, the computer-readable storage medium 300 includes a non-transitory computer-readable storage medium. The computer-readable storage medium 300 has a storage space for program codes 310 that executes any of the above blocks of the methods. These program codes may be read from or written into one or more computer program products. The program codes 310 may, for example, be compressed in a suitable form.

In summary, according to the wearable device interaction method, the wearable device interaction apparatus, the wearable device, and the storage medium provided by the embodiments of the present disclosure, since no physical button is set, the hardware cost caused by the physical button and the non-display area caused by the physical button can be reduced, so as to increase the proportion of the display area. In the case that the wearable device does not include the physical button, the display is switched from the non-primary interface to the primary interface through the touch-control operation meeting the target condition, thereby achieving the same function as the physical button. Specifically, the display is switched from the non-primary interface to the primary interface through the pressing duration corresponding to the pressing operation reaching the target pressing duration, thereby achieving the same function as the physical button and improving the user's experience. In addition, the screen is turned off when any interface is detected that the proportion of the touch area in the touch screen is greater than the target proportion. The switching from the displaying the primary interface to the displaying of the secondary interface, the switching of the displaying of the multiple secondary interfaces, and the switching of the displaying of the secondary interface to the displaying of the primary interface are realized through the first sliding operation. The return of the lower-level interface is realized through the second sliding operation. In this situation, when the wearable device does not include the physical button, quick interaction with the wearable device can be realized through the touch operation and the sliding operation acting on the touch screen, so as to improve the convenience of operation.

Finally, it should be noted that the above embodiments are only used to illustrate the technical solutions of the present disclosure, not to limit them. Although the present disclosure has been described in detail with reference to the foregoing embodiments, those skilled in the art should understand that the technical solutions described in the foregoing embodiments can still be modified, or some of the technical features thereof can be equivalently substituted. These modifications or substitutions do not drive the essence of the corresponding technical solutions deviate from the spirit and scope of the technical solutions of the embodiments of the present disclosure.

## Claims

1. A wearable device interaction method, implemented by a wearable device, wherein the wearable device comprises a touch screen but does not comprise a physical button, the method comprises:
detecting, in response to the touch screen displaying a non-primary interface, a touch-control operation acting on the touch screen; and
switching, in response to the touch-control operation acting on the touch screen satisfying a target condition being detected, the touch screen from displaying the non-primary interface to displaying a primary interface.

2. The method according to claim 1, wherein the switching, in response to the touch-control operation acting on the touch screen satisfying a target condition being detected, the touch screen from displaying the non-primary interface to displaying a primary interface comprises:
acquiring, in response to a pressing operation acting on the touch screen being detected, a pressing duration corresponding to the pressing operation; and
switching, in response to the pressing duration reaching a target pressing duration, the touch screen from displaying the non-primary interface to displaying the primary interface.

3. The method according to claim 2, wherein the acquiring, in response to a pressing operation acting on the touch screen being detected, a pressing duration corresponding to the pressing operation comprises:
acquiring, in response to the pressing operation acting on the touch screen being detected, a pressing position corresponding to the pressing operation; and
acquiring, in response to the pressing position being located in a target area of the touch screen, the pressing duration corresponding to the pressing operation.

4. The method according to claim 2 or claim 3, wherein the acquiring, in response to a pressing operation acting on the touch screen being detected, a pressing duration corresponding to the pressing operation comprises:
acquiring, in response to the pressing operation acting on the touch screen being detected, a pressing force corresponding to the pressing operation; and
acquiring, in response to the pressing force being greater than a target pressing force, the pressing duration corresponding to the pressing operation.

5. The method according to any one of claims 2-4, wherein after the switching, in response to the pressing duration reaching a target pressing duration, the touch screen from displaying the non-primary interface to displaying the primary interface, and the method further comprises:
acquiring, in response to another pressing operation acting on the touch screen being continuously detected, another pressing duration corresponding to the another pressing operation; and
locking the touch screen in response to the another pressing duration being greater than a preset pressing duration, wherein the preset pressing duration is greater than the target pressing duration.

6. The method according to any one of claims 1-5, wherein the primary interface comprises a dial interface, and the switching, in response to the touch-control operation acting on the touch screen satisfying a target condition being detected, the touch screen from displaying the non-primary interface to displaying a primary interface comprises:
switching, in response to the touch-control operation acting on the touch screen satisfying the target condition being detected, the touch screen from displaying the non-primary interface to displaying the dial interface.

7. The method according to any one of claims 1-5, further comprising:
detecting, in response to the touch screen displaying an interface, a touch operation acting on the touch screen;
acquiring, in response to the touch operation acting on the touch screen being detected, a proportion of a touch area corresponding to the touch operation in the touch screen; and
controlling, in response to the proportion being greater than a target proportion, the touch screen to be off.

8. The method according to claim 7, wherein after the controlling, in response to the proportion being greater than a target proportion, the touch screen to be off, the method further comprises:
lighting the touch screen and displaying the primary interface on the touch screen in response to a target instruction being received, wherein the target instruction is configured to indicate to light the touch screen.

9. The method according to claim 8, wherein the lighting the touch screen and displaying the primary interface on the touch screen in response to a target instruction being received comprises:
acquiring, in response to the target instruction being received, a time receiving the target instruction, and calculating a duration between the time receiving the target instruction and a time when the touch screen is off,
lighting the touch screen and displaying the primary interface on the touch screen, in response to the duration between the time receiving the target instruction and the time when the touch screen is off being greater than a target duration.

10. The method according to claim 9, further comprising:
lighting the touch screen and displaying the interface displayed before the touch screen is off on the touch screen, in response to the duration between the time receiving the target instruction and the time when the touch screen is off being not greater than the target duration.

11. The method according to any one of claims 1-10, further comprising:
detecting, in response to the touch screen displaying the primary interface, a sliding operation acting on the touch screen;
switching, in response to a first sliding operation acting on the touch screen being detected, the touch screen from displaying the primary interface to displaying a secondary interface based on the first sliding operation, wherein the secondary interface comprises an application list.

12. The method according to claim 11, wherein the switching, in response to a first sliding operation acting on the touch screen being detected, the touch screen from displaying the primary interface to displaying a secondary interface based on the first sliding operation comprises:
superimposing, in response to the first sliding operation acting on the touch screen being detected, a floating layer on the primary interface based on the first sliding operation, and displaying the secondary interface on the floating layer.

13. The method according to claim 11 or claim 12, wherein a number of the secondary interfaces is multiple, and after the switching, in response to a first sliding operation acting on the touch screen being detected, the touch screen from displaying the primary interface to displaying a secondary interface based on the first sliding operation, further comprising:
switching and displaying, in response to the first sliding operation acting on the touch screen being detected, the multiple secondary interfaces on the touch screen based on the first sliding operation.

14. The method according to any one of claims 1-13, further comprising:
detecting, in response to the touch screen displaying a first interface, a sliding operation acting on the touch screen, wherein the first interface is a non-primary interface; and
switching, in response to a second sliding operation acting on the touch screen being detected, the touch screen from displaying the first interface to displaying a second interface based on the second sliding operation, wherein the second interface is an upper-level interface of the first interface.

15. A wearable device interaction apparatus, applied to a wearable device, wherein the wearable device comprises a touch screen but does not comprise a physical button, and the interaction apparatus comprises:
a touch-control operation detection module, configured to detect, in response to the touch screen displaying a non-primary interface, a touch-control operation acting on the touch screen; and
a first switching display module, configured to switch, in response to the touch-control operation acting on the touch screen satisfying a target condition being detected, the touch screen from displaying the non-primary interface to displaying a primary interface.

16. The apparatus according to claim 15, further comprising:
a touch operation detection module, configured to detect, in response to the touch screen displaying an interface, a touch operation acting on the touch screen;
a proportion acquisition module, configured to acquire, in response to the touch operation acting on the touch screen being detected, a proportion of a touch area corresponding to the touch operation in the touch screen; and
an off-screen control module, configured to control, in response to the proportion being greater than a target proportion, the touch screen to be off.

17. The apparatus according to claim 15 or claim 16, further comprising:
a first sliding operation detection module, configured to detect, in response to the touch screen displaying the primary interface, a sliding operation acting on the touch screen; and
a second switching display module, configured to switch, in response to a first sliding operation acting on the touch screen being detected, the touch screen from displaying the primary interface to displaying a secondary interface based on the first sliding operation, wherein the secondary interface comprises an application list.

18. The apparatus according to claim 15 or claim 16, further comprising:
a second sliding operation detection module, configured to detect, in response to the touch screen displaying a first interface, a second sliding operation acting on the touch screen, wherein the first interface is a non-primary interface; and
a third switching display module, configured to switch, in response to the second sliding operation acting on the touch screen being detected, the touch screen from displaying the first interface to displaying a second interface based on the second sliding operation, wherein the second interface is an upper-level interface of the first interface.

19. A wearable device, comprising a touch screen, a memory, and a processor, wherein the touch screen and the memory are coupled to the processor, the memory is stored with instructions, and the processor is configured to, when executing the instructions, implement the method according to any one of claims 1-14.

20. A computer-readable storage medium, wherein the computer-readable storage medium is stored program codes, and the program codes are configured to, when being called by a processor, implement the method according to any one of claims 1-14.
